# EUROPEAN PATENT SPECIFICATION

(11) **EP 0 312 266 B1**
(45) Date of publication and mention of the grant of the patent: **29.12.1993**
(21) Application number: 88309390.8
(22) Date of filing: 07.10.1988
(51) Int. Cl.: H04N 5/91, G11B 20/06, G11B 5/012, H04N 5/781

(54) **Apparatus for reproducing recorded information with cross modulation suppression**
Gerät zur Wiedergabe von aufgezeichneten Informationen mit Kreuzmodulationsunterdrückung
Appareil pour la reproduction d'information enregistrée avec suppression de l'intermodulation

(30) Priority: 08.10.1987 JP 254282/87
(43) Date of publication of application: 19.04.1989
(73) Proprietor: PIONEER ELECTRONIC CORPORATION, Meguro-ku Tokyo 153 (JP)
(72) Inventor: Senso, Hitoshi c/o Pioneer, Hanazono 4-chome Tokorozawa-shi Saitama (JP)
(74) Representative: Brunner, Michael John

(56) References cited:
- FR-A- 2 326 095
- GB-A- 2 022 959
- US-A- 4 309 722
- PATENT ABSTRACTS OF JAPAN vol. 5, no. 30 (E-47)(702) 24 February 81,, & JP-A-55 158716 (NIPPON HOSO KYOKAI) 10 December 80

## Description

The present invention relates to apparatus for reproducing recorded information, and more particularly to apparatus for reproducing information recorded on recording media such as video disks.

It is conventional for signals recorded on recording disks, such as video disks, to be produced by mixing an FM signal with an EFM signal. The FM signal is obtained through FM modulation of a video signal. The EFM signal is obtained through EFM modulation of an audio signal. The recorded signal thus contains the information to reproduce an audio-visual program.

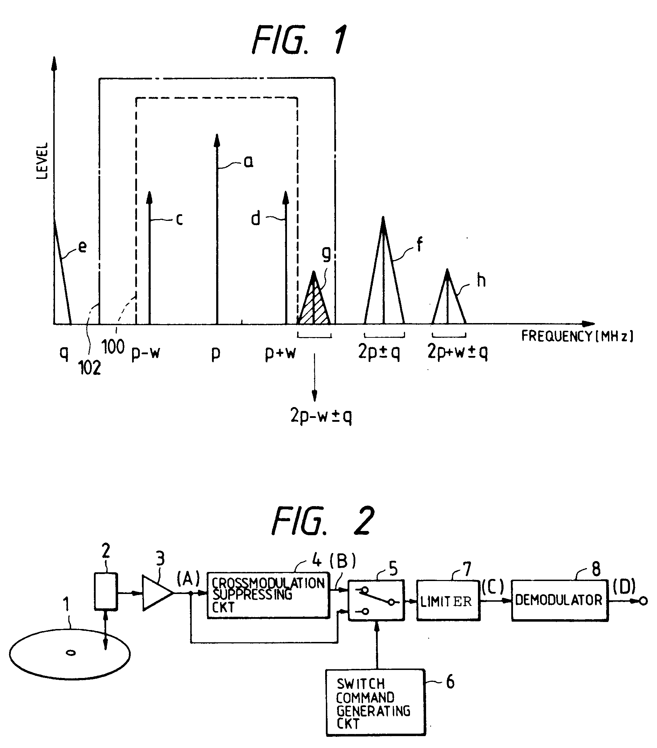

Fig. 1 illustrates the frequency spectrum of a frequency-modulated monochromatic video signal added to an EFM signal, after the mixed FM and EFM signals have been subjected to a limiter. An upper subcarrier d and a lower subcarrier c exist at (p+ω) MHz and (p-ω) MHz, respectively, relative to a main carrier a at the frequency p MHz. Signal e, extending over the bandwidth 0 to q MHz, represents the EFM signal. When the main carrier a, the upper and lower subcarriers d and c, and the EFM signal e are added together, and the resultant signal is subjected to a limiter, there will be produced, at least theoretically, a cross modulation component f of bandwidth (2p-q) to (2p+q) MHz, a cross modulation component g of bandwidth (2p-ω-q) to (2p-ω+q) MHz, and a cross modulation component h of bandwidth (2p+ω-q) to (2p+ω+q) MHz.

In conventional video reproducing systems, a video reproducing bandwidth region 100 bounded by the dotted line in Fig. 1, has been defined such that the cross modulation components f and h exist outside the video reproducing region. A video reproducing region 102 of wider bandwidth, bounded by the one-dashed lined in Fig. 1 has been considered. Utilization of the wider video reproducing region 102 results in the cross modulation component g existing within the bandwidth of the video reproducing region.

A conventional apparatus for reproducing recorded information is arranged in such a way that to reproduce video signal the video FM signal component in the RF signal read from a disk, for example, by and optical pickup, is merely amplitude-limited and then supplied to an FM demodulator. Thus, with the conventional apparatus, the cross modulation component g will be supplied to the FM demodulator together with the video signal if the bandwidth of the disk is widened to correspond to region 102. Since the frequency of this cross modulation component g is close to the frequency of the upper subcarrier d, it adversely affects the color signal by changing the hue saturation, and causes noise in luminance signal components. The result is a deteriorated picture quality.

The present invention overcomes the aforementioned deficiencies by providing an apparatus for reproducing recorded information in which the cross modulation component g may be effectively suppressed.

US-A-4309722 discloses apparatus for reproducing an FM signal of a predetermined bandwidth recorded on a recording medium along with another known signal having a bandwidth outside the bandwidth of the FM signal, and cross modulation components of the FM signal and the other known signal, the cross modulation components having frequency components in the bandwidth of the FM signal, the apparatus comprising:
pickup means for reading a signal, including the FM signal, from the recording medium, and
amplifying means for amplifying the signal including the FM signal read from the recording medium.

The present invention is characterised over US-A-4309772 by the amplifying means having a frequency response characteristic such that the gain of the amplifying means decreases at frequencies equal to the frequency components of the cross modulation components that fall within the bandwidth of the FM signal; and
a limiter circuit for limiting the amplitude of the output from the amplifier means.

In the drawings:-
Fig. 1 is a diagram showing the cross modulation components generated when storing information;
Fig. 2 is a block diagram showing an embodiment of the present invention;
Fig. 3 is a diagram showing the frequency spectra of signals of respective parts of the apparatus shown in Fig. 2;
Fig. 4 is a circuit block diagram showing a specific circuit example of a cross modulation suppressing circuit 4 of the apparatus in Fig. 2;
Fig. 5 is a graph showing frequency response of the circuit shown in Fig. 4;
Fig. 6 is a block diagram showing another embodiment of the present invention; and
Fig. 7 shows graphs illustrating frequency response of the cross modulation suppressing circuit 4 of the apparatus shown in Fig. 6.

Embodiments of the present invention will now be described in greater detail with reference to Fig. 2 through 7.

In Fig. 2, an RF signal obtained from a disk 1 by a pickup 2, is supplied to a cross modulation suppressing circuit 4 and one of the input terminals of a switch 5 through an RF amplifier 3. The cross modulation suppressing circuit 4 consists of an amplifier having a frequency response in which the gain decreases with an increase in the frequency of an input signal. The output of the cross modulation suppressing circuit 4 is supplied to the other terminal of the switch 5.

A switch command signal is supplied from a switch command generating circuit 6 to the control terminal of the switch 5. The switch 5 outputs, selectively, the output of the cross modulation suppressing circuit 4 when the switch command signal is not present, and the output of the RF amplifier 3 when the switch command signal is present.

The switch command generating circuit 6 is supplied with a disk identifying signal indicative of whether the disk 1 is a CAV (constant angular velocity) type or a CLV (constant linear velocity) type, as well as a position detection signal indicative of the position of the pickup in radial direction of the disk 1. The disk identifying signal is produced from data sampled from the reproduced video signal in a system controller (not shown). Such data may be stored in a specified region of the disk separated from the video signal region. The position detection signal may, for example, be the output of a potentiometer (not shown) which produces a signal in accordance with the radial position of a slider on which a pickup 2 is carried. When the disk identifying signal indicates a CAV disk, the switch command generating circuit 6 is responsive to the position detection signal to detect when the pickup 2 is at a position on the inner side of a predetermined radius to thereby generate a switch command signal.

Thus, when the disk 1 is of the CAV (constant angular velocity) type, the switch command generating circuit 6 outputs the switch command signal on detecting that the pickup 2 is at a position on the inner side of the predetermined radius causing the RF signal to be directly amplified to limiter 7, and not through the cross modulation suppressing circuit.

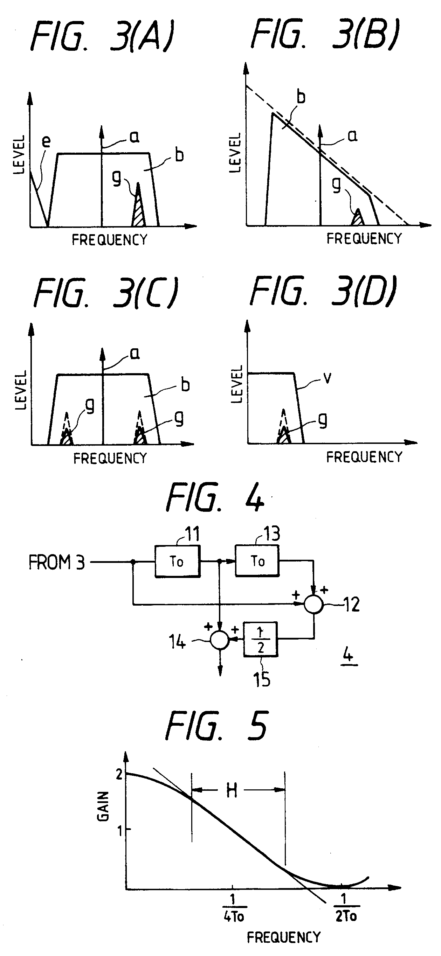

The output of the switch 5 is supplied to a demodulator 8 after it is amplitude-limited by a limiter 7. The FM demodulation is performed in the demodulator 8 to reproduce the video signal. With arrangement as described, the frequency spectrum of the RF signal that is read from the disk 1 by means of the pickup 2 is as shown in Fig. 3(A), where in video FM signal having a bandwidth b and a main carrier at the center thereof, exists together with the cross modulation components g which is a cross modulation between the video FM signal b and the EFM signal e generated when recording the video signal. if the frequency response of the cross modulation suppressing circuit 4 is arranged to be as shown by the dotted line in Fig. 3(B), the frequency spectrum of the RF signal through the cross modulation suppressing circuit 4 will be as shown by the solid line in Fig. 3(B). Thus, the cross modulation component g that exists in the frequency range of the upper side band is suppressed.

When the output of the cross modulation suppressing circuit 4 is supplied to the limiter 7 through the switch 5 and if the video FM signal b in the RF signal through the cross modulation suppressing circuit 4 is arranged to have an amplitude large enough so that it will be amplitude-limited by the limiter 7, the frequency spectrum of the output of the limiter 7 will be as shown by the solid line in Fig. 3(C). That is, the cross modulation component g at the output of the limiter 7 will be a small hatched area, compared to the area under the dotted lien which would correspond to the cross modulation component g when the RF signal output of the RF amplifier 3 is not supplied to the limiter 7 via the cross modulation suppressing circuit 4. Additionally, the video FM signal b will be limited to a level determined by the limiter 7.

The output of the limiter 7 is supplied to the demodulator 8 to produce a video signal v having the frequency spectra shown in Fig. 3(D). The component shown by hatching is the cross modulation component g in the RF signal through the cross modulation suppressing circuit 4 and the component shown by the dotted line is the cross modulation component g in the RF signal not through the cross modulation suppressing circuit 4.

This is done so that is the main carrier level decreases due to MTF (modulation transfer function) on the inner side of the predetermined radius of the CAV disk, the main carrier level of the video FM signal supplied to the limiter 7 does not decrease below the level of the lower side bands.

By the way, in the CAV disk, because the outer side of the disk is different from the inner side thereof in the recording density of information pits, the efficiency of a photoelectric conversion of the pickup is lowered toward the inner side of the disk. For this reason, the gain of a high frequency component, which suffers higher from the influence, is generally increased on the inner side of the disk. Under this condition, if the cross modulation suppressing circuit 4 operates on the inner side of the disk, then the levels between the main carrier and the lower side bands may be reversed. Accordingly, in the present invention, when the pickup is located at the inner side of the CAV disk, then the switch command generating circuit 6 outputs a switch command signal to switch over the switch 5 so that a signal which does not pass through the cross modulation suppressing circuit 4 is outputted.

Fig. 4 illustrates a specific circuit implementation of the cross modulation suppressing circuit 4. In Fig. 4, the RF signal from amplifier 3 is supplied to a delay line 11 and a summing circuit 12. The delay line 11 is arranged to delay an input signal thereby To. The RF signal through the delay line 11 is supplied to a delay line 13 and a summing circuit 14. The signal delay time of the delay line 13 is selected to be equal to that of the delay line 11. The RF signal through the delay line 13 is supplied to the summing circuit 12 to be added to an input RF signal. The output of the summing circuit 12 is attenuated to 1/2 of its amplitude by an attenuator 15 and then is supplied to a summing circuit 14 for adding to the output of the delay line 11. The output of the summing circuit 14 is output as the output of the cross modulation suppressing circuit 4.

As shown in Fig. 5, the frequency response of the cross modulation suppressing circuit thus far described in such that the gain varies along a cosine curve in accordance with the frequency of the input signal thereto, where the gain is nearly proportional to the frequency of the input signal within the frequency band H about 1/4To.

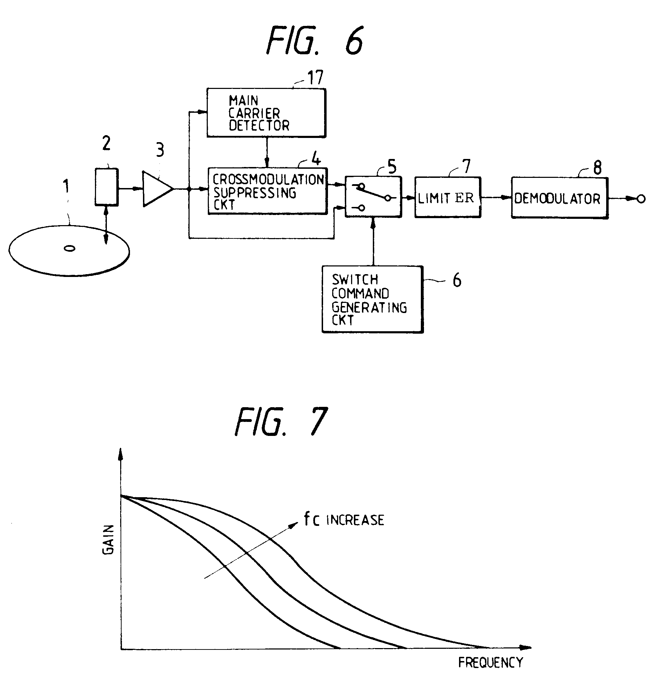

Fig. 6 shows a block diagram of another embodiment of the invention. In Fig. 6, a disk 1, a pickup 2, an RF amplifier 3, a cross modulation suppressing circuit 4, a switch 5, a switch command generating circuit 6, a limiter 7, and a demodulator 8 are connected to each other in a manner similar to that of the apparatus in Fig. 2. The Fig. 6 embodiment differs from the Fig. 1 embodiment in that the output of the RF amplifier 3 is also supplied to a main carrier detector 17. The main carrier detector 17 is arranged to generate a detection signal in accordance with the frequency of the main carrier. The main carrier detection signal is supplied to the cross modulation suppressing circuit 4. The cross modulation suppressing circuit 4 is arranged in such a way that the period of the cosine curve indicative of the frequency response will be larger, for example, as shown in Fig. 7 with an increase in the frequency fc of the main carrier. The cross modulation suppressing circuit 4 may also be arranged in such a way that the signal delay time of the delay line 11 and 13 varies in accordance with the main carrier detection signal.

With the aforementioned arrangement, whatever the main carrier frequency may be, the frequency response of the cross modulation suppressing circuit 4 has a decreasing gain with an increasing frequency near the main carrier frequency, thereby preventing distortion of the reproduced video signal.

An apparatus for reproducing recorded information according to the invention incorporates an amplifying means for amplifying an FM signal that is read from a recording medium in which the FM signal and another known signal, consisting of frequency components outside of the FM signal, which amplifying means has a frequency response in which the gain decreases at frequencies equal to the frequency components of the cross modulation of the FM signal and the other known signal falling within the frequency band of the FM signal. The FM signal is amplitude-limited after the level of the cross modulation components within the FM signal bandwidth have been attenuated in the amplifying means, thereby permitting suppression of the cross modulation components without varying the level of the FM signal.

Consequently, the apparatus for reproducing stored information according to the present invention can prevent variation in the hue saturation and prevent noise generation in the luminance signal due to the cross modulation components of the EFM signal and the video FM signal. Degradation of picture quality due to other unwanted components having the same frequencies as the cross modulation components can also be prevented in a similar manner.

## Claims

1. Apparatus for reproducing an FM signal of a predetermined bandwidth recorded on a recording medium (1) along with another known signal having a bandwidth outside the bandwidth of the FM signal, and cross modulation components of the FM signal and the other known signal, the cross modulation components having frequency components in the bandwidth of the FM signal, the apparatus comprising:
pickup means (2) for reading a signal, including the FM signal, from the recording medium;
amplifying means (4) for amplifying the signal including the FM signal read from the recording medium; characterised by
the amplifying means having a frequency response characteristic such that the gain of the amplifying means decreases at frequencies equal to the frequency components of the cross modulation components that fall within the bandwidth of the FM signal; and
a limiter circuit (7) for limiting the amplitude of the output from the amplifier means.

2. The apparatus as claimed in claim 1 further including switch means (5) positioned between the amplifying means (4) and the limiter, one input to the switch means being the output from the applying means, another input to the switch means corresponding to the read signal without being amplified by the amplifying means; and
switch command circuit means (16) responsive to command data and having an output coupled to the switch means for causing either of the inputs to the switch means to be output therefrom.

3. The apparatus as claimed in claim 2 wherein the recording medium (1) is a video disk and the command data are data designating whether the video disk is of the CAV or CLV type and the radial position of the pickup means (2) relative to the disk, the switch command circuit means (6) including means for causing the switch means (5) to transfer the another input to the limiter (7) when the command data indicates a CAV disk and the pickup means is positioned to read from positions on the CAV disk interior to a predetermined disk radius.

4. The apparatus as claimed in claim 1 wherein the frequencies of the cross modulation components are higher than the carrier frequency of the FM signal, the amplifying means (4) having a frequency response characteristic such that the gain of the amplifying means decreases with increasing frequency components.

5. The apparatus as claimed in claim 1 wherein the amplifying means (4) comprises a first delay means (11) receiving a signal representing the read signal, a second delay means receiving the output from the first delay means (13), first adder means (12) receiving the output from the second delay means and the signal representing the read signal, attenuator means (15) for attenuating the output from the first adder means, and second adder means (14) receiving the output from the attenuator means and the output from the first delay means, the output from the second adder means being the output from the amplifying circuit.

6. The apparatus as claimed in claim 2 further including FM carrier frequency detecting means (17) for controlling the gain versus frequency characteristics of the amplifying means in accordance with the frequency of the FM carrier.

## Patentansprüche

1. Gerät zur Wiedergabe eines FM-Signals einer vorgegebenen Bandbreite, das auf einem Aufzeichnungsmedium (1) zusammen mit einem anderen bekannten Signal aufgezeichnet ist, das eine Bandbreite außerhalb der Bandbreite des FM-Signals aufweist, sowie von Kreuzmodulationskomponenten des FM-Signals und des anderen bekannten Signals, wobei die Kreuzmodulationskomponenten Frequenzkomponenten in der Bandbreite des FM-Signals aufweisen, wobei das Gerät folgende Merkmale aufweist:
einen Aufnehmer (2) zum Lesen eines Signals, das das FM-Signal einschließt, von dem Aufzeichnungsmedium;
eine Verstärkungsanordnung (4) zur Verstärkung des Signals, das das FM-Signal einschließt, das von dem Aufzeichnungsmedium gelesen wird; gekennzeichnet dadurch, daß die Verstärkungsanordnung eine Frequenzdurchlaßcharakteristik derart aufweist, daß die Verstärkung der Verstärkungsanordnung bei Frequenzen gleich den Frequenzkomponenten der Kreuzmodulationskomponenten abnimmt, die innerhalb der Bandbreite des FM-Signals fallen; und
durch einen Begrenzerschaltkreis (7) zur Begrenzung der Amplitude des Ausgangs der Verstärkeranordnung.

2. Gerät nach Anspruch 1, das weiterhin eine Schalteranordnung (5) aufweist, die zwischen der Verstärkeranordnung (4) und dem Begrenzer angeordnet ist, wobei ein Eingang zu der Schalteranordnung der Ausgang der Verstärkeranordnung ist, wobei ein anderer Eingang der Schalteranordnung entsprechend zu dem gelesenen Signal vorgesehen ist, ohne durch die Verstärkeranordnung verstärkt zu werden; und
eine Schalterbefehlschaltkreisanordnung (16), die auf Befehlsdaten anspricht und die einen Ausgang aufweist, der mit der Schalteranordnung verbunden ist, um irgendeinen der Eingänge der Schalteranordnung zuzuführen, der von dort ausgegeben wird.

3. Gerät nach Anspruch 2, wobei das Aufzeichnungsmedium (1) eine Videoplatte ist und die Befehlsdaten Daten sind, die bestimmen, ob die Videoplatte vom CAV- oder CLV-Typ ist, und die die radiale Stellung des Aufnehmers (2) relativ zu der Platte bestimmen, wobei die Schalterbefehlschaltkreisanordnung (6) Einrichtungen umfaßt, um die Schalteranordnung (5) zu veranlassen, den anderen Eingang zu dem Begrenzer (7) zu übertragen, wenn die Befehlsdaten eine CAV-Platte anzeigen und der Aufnehmer so positioniert wird, um von Stellungen auf dem CAV-Platteninnenbereich zu einem vorbestimmten Plattenradius hin zu lesen.

4. Gerät nach Anspruch 1, wobei die Frequenzen der Kreuzmodulationskomponenten höher als die Trägerfrequenzen des FM-Signals sind, wobei die Verstärkungsanordnung (4) eine Frequenzdurchlaßcharakteristik derart aufweist, daß die Verstärkung der Verstärkungsanordnung mit einem Ansteigen der Frequenzkomponenten abnimmt.

5. Gerät nach Anspruch 1, wobei die Verstärkungsanordnung (4) eine erste Verzögerungseinrichtung (11), die ein Signal aufnimmt, das das Lesesignal darstellt, eine zweite Verzögerungseinrichtung (13), die den Ausgang von der ersten Verzögerungseinrichtung aufnimmt, eine erste Summierstufe (12), die den Ausgang von der zweiten Verzögerungseinrichtung und das Signal, das das Lesesignal darstellt, aufnimmt, eine Dämpfungseinrichtung (15) zur Dämpfung des Ausgangs von der ersten Summierstufe, und eine zweite Summierstufe (14) aufweist, die den Ausgang von der Dämpfungseinrichtung und den Ausgang von der ersten Verzögerungsstufe aufnimmt, wobei der Ausgang von der zweiten Summierstufe der Ausgang von dem Verstärkungsschaltkreis ist.

6. Gerät nach Anspruch 2, das weiterhin eine FM-Trägerfrequenzermittlungseinrichtung (17) zur Steuerung der Verstärkung gegenüber der Frequenzkennlinien der Verstärkungsanordnung in Übereinstimmung mit der Frequenz des FM-Trägers aufweist.

## Revendications

1. Dispositif pour la reproduction d'un signal MF d'une bande passante prédéterminée enregistré sur un support d'enregistrement (1) en conjonction avec un autre signal connu possédant une bande passante à l'extérieur de la bande passante du signal MF et des composants d'intermodulation du signal MF et de l'autre signal connu, les composants d'intermodulation possédant des composantes en fréquence dans la bande passante du signal MF, dispositif comprenant :
- un moyen de capteur (2) pour la lecture d'un signal comprenant le signal MF à partir du support d'enregistrement;
- un moyen d'amplification (4) pour amplifier le signal comprenant le signal MF lu à partir du support d'enregistrement;
dispositif caractérisé par le fait que :
- le moyen d'amplification présente une caractéristique de réponse en fréquence telle que le gain du moyen d'amplification diminue à des fréquences égales aux composantes en fréquence des composantes d'intermodulation entrant dans la bande passante du signal MF; et
- un circuit de limitation (7) limite l'amplitude de la sortie du moyen d'amplificateur.

2. Dispositif selon la revendication 1, comprenant, de plus, un moyen de commutateur (5) placé entre le moyen d'amplification (4) et le limiteur, une entrée du moyen de commutateur constituant la sortie du moyen d'amplification, une autre entrée du moyen de commutateur correspondant au signal lu sans être amplifié par le moyen d'amplification et un moyen de circuit de commande de commutation (16) sensible à des données de commande et possédant une sortie couplée au moyen de commutateur pour provoquer la génération de chacune des entrées du moyen de commutateur.

3. Dispositif selon la revendication 2, dans lequel le support d'enregistrement (1) est un disque vidéo et les données de commande sont des données indiquant si le disque vidéo est du type CAV ou CLV et la position radiale du moyen de capteur (2) par rapport au disque, le moyen de circuit de commande de commutation (6) comprenant un moyen pour amener le moyen de commutateur (5) à transférer l'autre sortie au limiteur (7) lorsque les données de commande indiquent un disque CAV et le moyen de capteur est placé pour lire à partir de positions sur la partie intérieure du disque CAV vers un rayon prédéterminé du disque.

4. Dispositif selon la revendication 1, dans lequel les fréquences des composantes d'intermodulation sont supérieures à la fréquence porteuse du signal MF, le moyen d'amplification (4) possédant une caractéristique de réponse en fréquence telle que le gain du moyen d'amplification diminue avec une augmentation des composantes en fréquence.

5. Dispositif selon la revendication 1, dans lequel le moyen d'amplification (4) comprend un premier moyen de temporisation (11) recevant un signal représentant le signal de lecture, un second moyen de temporisation recevant la sortie du premier moyen de temporisation (13), un premier moyen d'additionneur (12) recevant la sortie du second moyen de temporisation et le signal représentant le signal de lecture, un moyen d'atténuateur (15) pour atténuer la sortie du premier moyen d'additionneur et un second moyen d'additionneur (14) recevant la sortie du moyen d'atténuateur et la sortie du premier moyen de temporisation, la sortie du second moyen d'additionneur constituant la sortie du circuit d'amplification.

6. Dispositif selon la revendication 2, comprenant, de plus, un moyen de détection de fréquence porteuse MF (17) pour la commande du gain par rapport à la caractéristique en fréquence du moyen d'amplification selon la fréquence de la porteuse MF.
